# EUROPEAN PATENT APPLICATION

(11) **EP 1 804 465 A1**
(43) Date of publication of application: **04.07.2007**
(21) Application number: 06301297.5
(22) Date of filing: 27.12.2006
(51) Int. Cl.: H04L 29/06

(54) **Collaborative communication traffic control network**

(30) Priority: 03.01.2006 US 324987
(71) Applicant: Alcatel Lucent, 75008 Paris (FR)
(72) Inventor: Choyi, Vinod Kumar, Ottawa, Ontario K2A 3W5 (CA); McNamee, Kevin, Ottawa, Ontario K1B 4E8 (CA)
(74) Representative: Hervouet, Sylvie

(57) **Abstract**

Collaborative communication traffic control systems and methods are disclosed. In a communication traffic control apparatus, a communication traffic control module controls transfer of communication traffic in accordance with one or more communication traffic control rules. A communication traffic control rule exchange module is operatively coupled to the communication traffic control module, and may exchange communication traffic control rules with an exchange module of another communication traffic control apparatus. This enables control of communication traffic transfer at both the communication traffic control apparatus and the other communication traffic control apparatus in accordance with the exchanged communication traffic control rules. A traffic control rule exchange module may receive traffic control rules from, transmit traffic control rules to, or both receive traffic control rules from and transmit traffic control rules to other exchange modules.

## Description

### Field of the Invention

This invention relates generally to communications and, in particular, to collaborative and distributed communication traffic control.

### Background

Currently available communication traffic control systems are targeted towards fixed communication networks and single-hop mobile networks that tend to be arranged in a sort of hierarchical fashion. A gateway to a Packet Data Network (PDN), for example, might be protected by a firewall. More firewalls may be put in place depending upon the nature of communications with external networks in the same operator's domain but traversing an insecure connection or communication with other operators/service providers for instance.

Where wireless communication networks interoperate with wired networks such as the Internet, firewalls are generally provided from interfaces at the border of the wired domains. All security-related issues are handled by the core/access network, and mobile stations are instead semi-passive participants.

This kind of solution is not suitable for new and upcoming networks such as mesh networks, personal area networks, sensor networks, and ad-hoc networks. Even though these types of networks can be connected to external PDNs and other networks and be protected using conventional firewalls and other filtering mechanisms such as call screening, Multimedia Messaging Service / Short Messaging Service (MMS/SMS) spam filtering, etc., conventional firewalls and filtering mechanisms cannot protect mobile stations from perhaps the biggest threat in these networks, namely unwanted traffic from other mobile stations or wireless network equipment.

The threats posed to mobile stations may include threats from, for example, unauthorized access, impersonation, flooding, and other malicious attacks, and non-malicious attacks such as spamming (data, multimedia), adult content, and unwanted calls. Malicious attacks are often intended to infect mobile stations with viruses, Trojans, etc. or to cause failures in a wireless network itself, in the case of flooding attacks for instance. Non-malicious attacks such as spam, while generally considered less damaging, also affect wireless systems by causing undue wastage of mobile station bandwidth, processing, and battery resources.

As noted above, traditional wireless networks are only protected from the wired backbone connecting to the Internet or to some other core/backbone network. Threat protection is not typically implemented within wireless access networks, even though a wireless network such as a mesh network might provide a perfect environment for malicious users and spammers. Conventional techniques would fail to provide effective protection for mobile/wireless communication devices from attacks in such mesh networks as those being deployed for security services (E911), Home Land Security Initiative, etc.

Thus, there remains a need for improved communication traffic control systems and methods.

### Summary of the Invention

Embodiments of the present invention provide a mechanism whereby communication network elements such as WiMax wireless base stations (BSs) collaborate with one another in order to provide communication traffic transfer control functionality within a wireless network such as a wireless mesh or ad-hoc network. Each BS can exchange traffic control rules with other BSs that form part of the collaborative network. Collaborating BSs can then control transfer of communication traffic in accordance with those rules. For example, a BS could filter packets that it receives based on rules that originated with one of its own mobile stations and/or rules that it has received from other BSs.

One aspect of the invention provides a communication traffic control apparatus. The apparatus includes a communication traffic control module configured for controlling transfer of communication traffic in accordance with one or more communication traffic control rules, and a communication traffic control rule exchange module operatively coupled to the communication traffic control module and configured for exchanging a communication traffic control rule with a further communication traffic control rule exchange module of a further communication traffic control apparatus to enable control of communication traffic transfer at both the communication traffic control apparatus and the further communication traffic control apparatus in accordance with the exchanged communication traffic control rule.

The communication traffic control rule exchange module may be configured for exchanging a communication traffic control rule with the further communication traffic control rule exchange module by receiving the communication traffic control rule from the further communication traffic control rule exchange module. In this case, the communication traffic control rule exchange module may also be configured for determining whether the exchanged communication traffic control rule is to be added to the one or more communication traffic control rules. This determination may be based on one or more of: a trust relationship between the communication traffic control apparatus and the further communication traffic control apparatus, an identifier associated with the further communication traffic control apparatus, an effect of the exchanged communication traffic control rule, and an integrity verification.

In some embodiments, the communication traffic control rule exchange module may also or instead be configured for transmitting a communication traffic control rule to the further communication traffic control rule exchange module.

Each of the one or more communication traffic control rules may specify at least one of: an identifier of a source of communication traffic, a type of communication traffic, and a priority of communication traffic.

The communication traffic control rule exchange module may be further configured for determining a time characteristic of the exchanged communication traffic control rule. The time characteristic specifies an effective lifetime of the exchanged communication traffic control rule.

In one implementation, a communication network element includes the communication traffic control apparatus and a transceiver operatively coupled to the communication traffic control module, the transceiver enabling transfer of communication traffic between the communication network element and one or more communication stations. The communication traffic control module controls communication traffic destined for or originating from the one or more communication stations.

A communication network may include a plurality of network elements, each network element of at least a subset of the plurality of network elements comprising the traffic control apparatus and a transceiver operatively coupled to the communication traffic control module. The transceiver enables transfer of communication traffic between the network element and one or more communication stations and between the network element and one or more other network elements. Communication traffic control modules of network elements between which communication traffic is transferred over a communication link may be configured for controlling communication traffic to be transferred over the communication link in accordance with one or more common communication traffic control rules.

Another aspect of the invention relates to a method, which includes providing a communication traffic control system for controlling transfer of communication traffic in accordance with one or more communication traffic control rules, and exchanging a communication traffic control rule between the communication traffic control system and a further communication traffic control system to enable control of communication traffic transfer at both the communication traffic control system and the further communication traffic control system in accordance with the exchanged communication traffic control rule.

The operation of exchanging may involve one or more of: receiving the communication traffic control rule from the further communication traffic control system, and transmitting the communication traffic control rule to the further communication traffic control system.

In the case of receiving the communication traffic control rule, the method may also involve adapting the controlling to control transfer of communication traffic at the communication traffic control system in accordance with the exchanged communication traffic control rule. This adapting may involve determining whether the controlling is to be adapted. In some embodiments, the operation of determining is based on one or more of: a trust relationship between the communication traffic control system and the further communication traffic control system, an identifier associated with the further communication traffic control system, an effect of the exchanged communication traffic control rule, and an integrity verification.

The exchanged communication control rule may have an effective lifetime during which the controlling is adapted to control transfer of communication traffic at the communication traffic control system in accordance with the exchanged communication traffic control rule.

A rule transmitting operation may involve determining whether the communication traffic control rule is to be transmitted to the further communication traffic control system, and transmitting the communication traffic control rule to the further traffic control system where it is determined that the communication traffic control rule is to be transmitted to the further communication traffic control system.

When implemented in a network element of a communication network, the method may also include detecting a new network element in the communication network. In this case, exchanging may involve exchanging a communication traffic control rule between the new network element and the network element.

There is also provided a distributed communication traffic control system that includes a plurality of communication traffic control modules for applying respective sets of one or more communication traffic control rules to control communication traffic transfer, and means associated with each of the a plurality of communication traffic control modules for propagating communication traffic control rules between communication traffic control modules. A propagated control rule is applied by multiple communication traffic control modules.

A wireless mesh network may incorporate such a system. A plurality of wireless network elements of the mesh network may each include a communication traffic control module and associated means for propagating, and also respective means for detecting addition of a further wireless network element to the wireless mesh network. The means for propagating, in each of one or more of the wireless network elements, propagates a communication traffic control rule between the one or more of the wireless network elements and the further wireless network element responsive to a detection by the means for detecting.

Other aspects and features of embodiments of the present invention will become apparent to those ordinarily skilled in the art upon review of the following description.

### Brief Description of the Drawings

Examples of embodiments of the invention will now be described in greater detail with reference to the accompanying drawings.

Fig. 1 is a block diagram of a communication system.

Fig. 2 is a block diagram of a communication device.

Fig. 3 is a signal flow diagram illustrating signalling between base stations of a wireless communication network.

Fig. 4 is a flow diagram of a communication traffic control method.

### Detailed Description of Preferred Embodiments

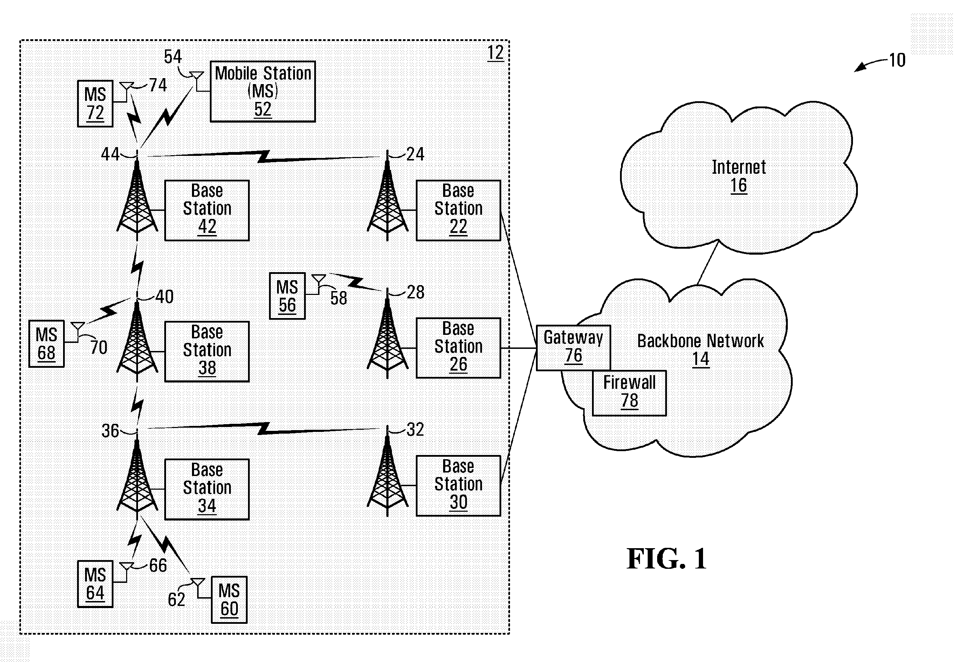

Fig. 1 is a block diagram of a communication system 10, and is illustrative of a system in which embodiments of the present invention might be implemented. The communication system 10 includes a wireless communication network 12, a backbone communication network 14, and the Internet 16. The wireless communication network 12 includes base stations 22, 26, 30, 34, 38, 42 that communicate with each other and provide communication services to mobile stations 52, 56, 60, 64, 68, 72. Each base station and mobile station has one or more antennas 24, 28, 32, 36, 40, 44, 54, 58, 62, 66, 70, 74. The backbone network 14 includes a gateway 76 and a firewall 78.

It should be appreciated that the system of Fig. 1, as well as the contents of the other drawings, are intended solely for illustrative purposes, and that the present invention is in no way limited to the particular example embodiments explicitly shown in the drawings and described herein. For example, a communication system may include many gateways and/or firewalls, more or fewer base stations or mobile stations than shown, or additional components and equipment that have not been shown in Fig. 1 to avoid overly complicating the drawing. Different types of networks may also be implemented or interconnected in a similar or different manner than shown.

The mobile stations 52, 56, 60, 64, 68, 72 represent communication devices that are configured to generate and transmit and/or receive and terminate communication traffic. This communication traffic is transferred within the wireless network 12 and between the wireless network 12 and an external network such as the Internet 16 through the gateway 76 and the backbone network 14.

Those skilled in the art to which the present application pertains will be familiar with many different transfer schemes used to transfer traffic in wireless networks. The structure and operation of example mobile stations and base stations will similarly be apparent to those skilled in the art. The wireless network 12 may use WiMax, WiFi, Universal Mobile Telecommunications System (UMTS), Code Division Multiple Access (CDMA) techniques such as CDMA2000, other radio access technologies, or a combination of radio technologies, for instance. However, the present invention is in no way limited to any particular transfer schemes or equipment types.

The backbone network 14, like the wireless network 12, may be any of various well-known network types, although a backbone network would normally be a wired communication network. The backbone network 14 and the Internet 16 may include other equipment than the gateway 76 and the firewall 78, such as switches, routers, and other types of network elements. These may include border or edge network elements like the gateway 76, which provide network access, and core network elements for routing communication traffic through the network 14 and the Internet 16.

Through the gateway 76, communication traffic can be translated between different protocols or formats if necessary, and transferred between the backbone network 14, and possibly the Internet 16, and the wireless network 12. The firewall 78, according to conventional firewalling techniques, protects the wireless network 12 from unwanted communication traffic originating in the wired portion of the system 10, that is, in the backbone network 14, the Internet 16, or traffic sources such as end user equipment connected thereto.

Although the firewall 78 protects the wireless network 12 from threats originating in the wired portions of the communication system 10, it does not provide protection from threats originating in the wireless network 12. Wireless connectivity, by its nature, does not require a physical (wire) connection to support communications, and therefore the number of potential malicious users that can obtain connectivity in a wireless network increases dramatically. A mobile/wireless network such as 12 should thus be protected not only by the firewall 78 from external threats in the wired backbone network 14 connected to the Internet 16, but also from internal threats originating in the wireless network 12 itself.

Embodiments of the invention provide a mechanism for prevention of malicious flooding, spamming, and other unwanted communication traffic in a communication network such as a mobile mesh or ad-hoc communication network. Communication traffic control may be provided at wireless interfaces in the wireless network 12, instead of at the gateway 76 or other interfaces to a wired backbone network. Distributed and collaborative traffic control, at the base stations 22, 26, 30, 34, 38, 42 or a subset thereof for instance, can further enhance protection of the wireless network 12.

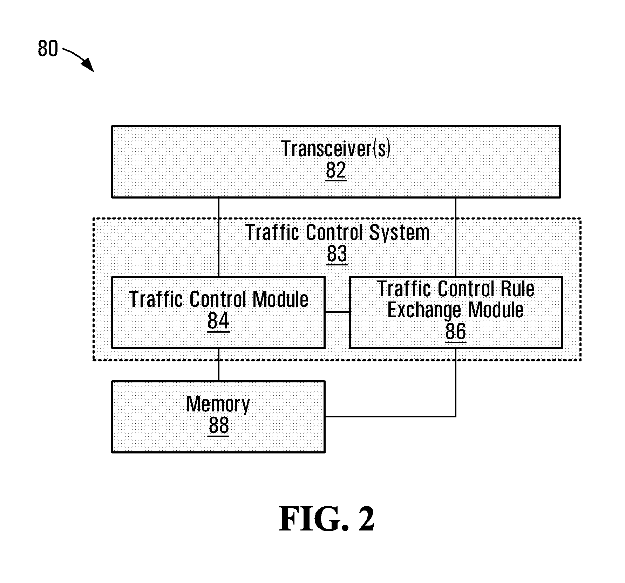

Fig. 2 is a block diagram of a communication device. According to one embodiment, the communication device 80 is a wireless base station, such as a network element in a WiMax mesh network. A network element may have the intelligence to perform traffic routing, or be a relatively "dumb" device that has one or more interfaces to communicate with other network elements or mobile stations. However, the traffic control techniques disclosed herein could also or instead be implemented in other types of network elements or communication devices, in other types of wireless or wired communication network equipment, or in stand-alone traffic control equipment that does not itself also provide communication services. Embodiments in which the communication device 80 is a mobile station are also contemplated. This type of implementation may be used, for example, in ad-hoc networks in which end user stations communicate with each other.

It should therefore be appreciated that a communication device incorporating a traffic control system may include additional components not specifically shown in Fig. 2. It should also be appreciated that the specific division of functions represented by the components shown in Fig. 2 is intended solely for the purposes of illustration and not to limit the scope of the invention. Other embodiments of the invention may include further, fewer, or additional components interconnected in a similar or different manner.

The illustrative example communication device 80 includes one or more transceiver(s) 82, a traffic control system 83 operatively coupled to the transceiver(s) 82, and a memory 88 operatively coupled to the traffic control system 83. In the traffic control system 83, a traffic control module 84 and a traffic control rule exchange module 86 are operatively coupled to each other, to the transceiver(s) 82, and to the memory 88.

The components of the communication device 80 may be operatively coupled to each other through physical connections such as conductive traces on a substrate where the components are provided on an electronic circuit card for communication equipment and/or backplane conductors where the components are distributed between multiple cards in the same equipment. The traffic control system 83 and the memory 88 could be provided on a traffic controller card, whereas the transceiver(s) 82 and other communication traffic processing components are provided on one or more line cards, for instance.

Logical interconnections are also contemplated, where any of the components of the communication device 80 are implemented using software for execution by one or more processing elements. In this case, components may access information stored in common storage locations in the memory 88, for example, and may thus be considered to be coupled to each other through a logical connection.

The transceiver(s) 82 may include a single transceiver that is used to transfer both communication traffic and traffic control rules between the communication device 80 and other communication devices. Although it would be possible to provide separate transceivers for these purposes, implementation of embodiments of the invention may be simplified by using the same transceiver to transfer both traffic and traffic control rules. The traffic control system 83 thus does not necessarily require that a dedicated rule transfer transceiver be provided in a communication device.

In the case of a shared transceiver 82, the transceiver may interact with other components of a communication device than the traffic control system 83. For example, a base station in a mesh network may have a number of interconnections with its neighboring base stations. Wireless mesh networks, and similarly ad-hoc networks, are self-configuring, self-tuning, and self-healing. These functions may be provided by control components (not shown) that configure the transceiver(s) 82 for communication with the neighboring base stations.

There may be other situations in which a communication device would include multiple transceivers 82. Wireless interfaces may be provided to communicate with other base stations and/or mobile stations, for example. One interface might be used to communicate between base stations, while another is used to communicate with mobile stations. Still another interface could be used to communicate with a wired network. In this case, the traffic control system 83 may interact with multiple transceivers 82, the wireless interfaces and possibly the wired interface in this example, which could be shared to transfer communication traffic and rules.

Various examples of control and data formats and protocols, as well as transceivers that support these formats and protocols, will be apparent to those skilled in the art. Embodiments of the invention are not restricted to any specific formats or protocols.

The traffic control module 84, the traffic control rule exchange module 86, and to some extent the transceiver(s) 82, may be implemented using hardware, software, firmware, or any combination thereof. Those skilled in the art will be familiar with many devices that may be used in implementing these components, such as microprocessors, microcontrollers, Application Specific Integrated Circuits (ASICs), Programmable Logic Devices (PLDs), and/or Field Programmable Gate Arrays (FPGAs), for example.

The memory 88, however, would generally be provided as a hardware component, and may include one or more memory devices. Solid state memory devices are common in communication devices, although the memory 88 may also or instead include memory devices for use with movable or even removable storage media.

In view of the many possible implementations of the functional components shown in Fig. 2, these components are described herein primarily in terms of their operation. Based on the operational descriptions, a skilled person would be enabled to implement embodiments of the invention in any of various ways.

The traffic control module 84 is operable to control the transfer of communication traffic through the transceiver(s) 82 in accordance with one or more communication traffic control rules stored in the memory 88. These traffic control rules may be established, for example, by a user or administrator through a user interface or remote terminal (not shown), and/or received from other communication devices such as a base station or a mobile station served by a base station. At any time, the rules stored in the memory 88 at a wireless base station may include local rules configured by a user or administrator or received from a mobile station for which the base station provides a home service area, remote rules received from another base station or from a roaming mobile station currently operating in a coverage area provided by the base station, both local and remote rules, or no rules. According to another possible implementation, the communication device 80 or some "intelligent" module thereof generates a rule or modifies a rule based on certain parameters, through constant learning of traffic and patterns for instance.

The traffic control rule exchange module 86 manages the traffic control rules stored in the memory 88. One function of the traffic control rule exchange module 86 is exchanging traffic control rules with the traffic control rule exchange modules of similar traffic control systems implemented in other communication devices. This enables control of communication traffic transfer at both the traffic control system 83 and the other traffic control systems in accordance with the same traffic control rules.

Traffic control rules may also or instead be received by the traffic control rule exchange module 86 from other traffic control systems, and possibly applied to communication traffic handled by the traffic control system 83. In this case, the traffic control rule exchange module 86 may make a determination as to whether or not a received communication traffic control rule should actually be applied by the traffic control module 84. This determination may be based on any of various criteria, which in some embodiments may include any or all of: a trust relationship between the traffic control system 83 and the other traffic control system from which the traffic control rule was received, an identifier associated with the other traffic control system or equipment in which the other traffic control system is implemented, an effect that the received traffic control rule would have on communication traffic transfer, and an integrity verification, to ensure that some entity did not modify the rule by interception and/or that a rule that appears to originate with a source actually originated with that source, for instance. If it is determined that a received traffic control rule should be applied, then the new traffic control rule may be stored to the memory 88 and/or passed to the traffic control module 84.

Trust relationships between traffic control systems or equipment could be established and maintained in any of various ways, according to existing security techniques for instance. In some embodiments, real-time authentication is used to establish or verify a trust relationship. Other embodiments may rely on a previously established trust relationship, which might be implied or inferred by using an encrypted or otherwise secure communication link to exchange traffic control rules. In this case, receipt of a rule via a secure link effectively implies that the rule originated from a trusted source.

Identifier-based rule decisions might use "white" lists and/or "black" lists to specify sources from which traffic control rules should or should not be accepted. In terms of effect-based criteria, with reference also to Fig. 1, if the traffic control rule exchange module 86 at the base station 38 were to receive from the base station 42 a traffic control rule that would, if applied by the traffic control module 84 at the base station 38, affect the transfer of communication traffic from the base station 38 to the base station 34, then the traffic control rule exchange module 86 at the base station 38 might reject that rule, and not add the rule to a rule database or other collection of rules in the memory 88. In this scheme, a traffic control rule received from a particular source might be applied at another traffic control system only if the traffic control rule affects transfer of communication traffic to that source.

Other traffic control rule decision criteria, and other ways of managing and applying those criteria, are also possible.

A traffic control rule may enable firewall-like traffic filtering functionality at the traffic control module 84, based on any or all of such properties as an identifier of a source and/or destination of communication traffic such as a source/destination base station or mobile station, a type of communication traffic, and a priority of communication traffic. This list of example traffic control rule properties is by no means exhaustive. Traffic control rules may specify these or other properties to achieve a desired level of traffic control. More "active" traffic properties, to limit traffic transfer rate for instance, are also contemplated.

Different types of traffic control rule may be applied at the traffic control system 83. Communication traffic that satisfies a permissive traffic control rule is transmitted from a traffic control system toward a destination, whereas communication traffic that satisfies a blocking traffic control rule is not transmitted from the traffic control system and may be dropped. Traffic control at a traffic control system may thereby be established to permit or block communication traffic on the basis of traffic control rules. A rule may also be a combination of these types. A rate-limiting rule may be permissive until a certain amount or rate of traffic transfer has been reached, and then effectively become a blocking rule.

Although the traffic control system 83 involves some additional processing of communication traffic that might not be performed in conventional systems, the additional processing load can be reduced, for example, by supporting relatively simple traffic control rules based on source/destination, priority, and other properties that can be quickly determined by the traffic control module 84. Depending on the resource savings that could be realized through traffic control, a higher level of processing may be warranted. If bandwidth is the main resource to be conserved and power and processing resources are available, which is usually the case in mesh network base stations, then it may be worthwhile to have more robust traffic control functionality. In general, traffic control rules can be established to provide a balance between the resources required for traffic control and the resource wasted because of flooding or other attacks.

In some embodiments, traffic control rules have an associated time characteristic specifying a lifetime for the rule. This time characteristic could be established by a source of the rule, or possibly by a traffic control system that receives the rule from another traffic control system. In the latter case, the time characteristic could be reported back to the source of the rule.

A rule is effective and applied by a traffic control module during its lifetime, which may be specified in terms of a time duration or an absolute time for instance. A source of a rule may or may not refresh the rule with remote traffic control systems depending upon the location of the source and/or the remote traffic control systems, context, time of day, etc. It should be noted that time characteristics could be handled in different ways by source and remote traffic control systems. A source system might maintain the rule beyond its lifetime so as to allow the rule to be applied locally and/or refreshed to remote systems, for example, whereas expired rules might not be applied by or even maintained in rule databases at remote traffic control systems.

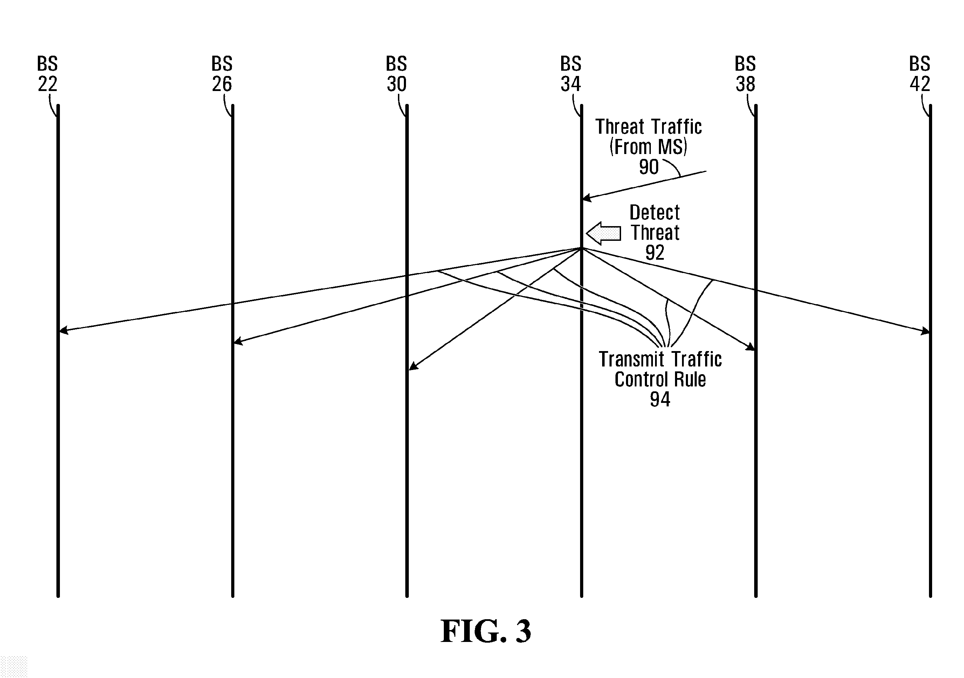

Fig. 3 is a signal flow diagram illustrating signalling between base stations of a wireless communication network. Operation of an embodiment of the invention will be further described with reference to Figs. 1-3. It is assumed below for the purposes of illustration that each base station 22, 26, 30, 34, 38, 42 can communicate with all other base stations either directly or indirectly.

In Figs. 1 and 3, the base stations (BSs) 22, 26, 30, 34, 38, 42 are all part of a collaborative network. Each BS can exchange traffic control rules with other BSs. Suppose that the BS 34 detects some form of threat or malicious traffic 90 originating from the MS 60 within its coverage area. The target of this malicious traffic might be the MS 64, which is also within the coverage area of the BS 34. Threat traffic may include a virus intended to infect mobile stations, or exhibit an abnormally high transfer rate in the case of a flooding threat, for example.

The BS 34, upon detecting the particular threat as shown at 92, informs the other BSs at 94 to filter communication traffic associated with this threat. This ensures that, even if the MS 60 (or the MS 64) moves to the coverage area of another BS, the other BSs automatically perform some filtering of at least threat-related traffic originating from the MS 60 and targeting the MS 64. It should be appreciated that in some implementations the MSs 60, 64 might not necessarily physically move out of range of the BS 34, but instead use another transceiver or logical connection, for instance, to connect to another BS. The MS 60 might target the MS 64 via a different transceiver and the BS 38, for example, if the MS 60 is close to both the BS 34 and the BS 38.

At each of the other BSs 22, 26, 30, 38, 42, the traffic control system 83 receives an alert or message transmitted from the BS 34 at 94, illustratively a message containing a traffic control rule for reducing the effects of the threat detected by the BS 34. Thus, the other BSs can take an appropriate action if threat traffic is received. The traffic control system 83 at each BS may, for example, block particular traffic that matches the profile specified by a traffic control rule received from the BS 34. In the above example of a threat originating from the MS 60 and targeting the MS 64, the traffic control rule might specify that all traffic from the MS 60 and destined for the MS 64 is to be blocked, for instance. The traffic control rule is preferably also applied at the BS 34.

The functions of threat detection and traffic control rule generation may be provided at the BS 34, as part of the traffic control system 83 for instance, at one or more mobile stations, at both the BS 34 and one or more mobile stations, or distributed between the BS 34 and one or more mobile stations. Either or both of these functions may involve interaction with a user or other personnel. For example, a mobile station user may identify a series of received e-mail messages as a flooding attack and then wish to block any subsequent e-mail messages from the same sender. In this case, the user might use a traffic control rule generation tool at the mobile station to specify a traffic control rule to be sent to the BS 34. Another embodiment might involve sending a traffic control request or similar message to the BS 34 to request that an appropriate blocking rule be generated and applied. The blocking rule is then propagated by the traffic control rule exchange module 86 of the BS 34 to other BSs, as shown at 94, and may be also be applied at the other BSs to control transfer of communication traffic.

Thus, considering another example, if the BS 34 or one of its mobile stations MS 60, 64 does not wish to receive traffic from a mobile station such as the MS 56 serviced by the BS 26, then a traffic control rule can be sent from the BS 34 to the BS 26, and possibly also to the BSs 22, 30, 38, 42, in the collaborative network 12. Assuming that appropriate trust relationships/permissions are in place, then each BS receives and applies this traffic control rule and all traffic originating from the MS 56 and destined to the BS 34 or possibly only traffic destined for the MS 60 or 64 is filtered either by the BS 26 or another BS. As noted above, a traffic control rule intended to control traffic originating with a particular MS may be sent to the BS that is currently serving that MS, and possibly to other BSs. In the current example, if the rule is sent to the BS 26, the traffic from the MS 56 is filtered by the BS 26, since it is the first hop element from the MS 56. Otherwise, another BS may filter traffic from the MS 56 on a subsequent hop.

Traffic control rule exchange can also be advantageous if communication service for the MS 56 were to hand off to a different BS, illustratively the BS 30. Since the BS 30 also receives and applies the traffic control rule, traffic originating from MS 56 and targeted to the BS 34 or the MS 60 or 64 continues to be filtered. Traffic control thus cannot be circumvented simply by moving between coverage areas of different wireless BSs. This provides much more effective traffic control functionality than conventional schemes and also avoids the necessity for traffic to arrive at a particular BS to be filtered. In addition, expensive wastage in bandwidth is avoided in that traffic can be blocked as close to a traffic source as possible.

A threat posed by a mobile station that is currently operating within a coverage area of a particular base station could possibly be detected by a remote base station instead of by the serving base station. For example, the BS 26 might detect threat traffic indicative of a traffic flooding virus infection at the MS 60, even though the infected MS 60 is not currently within its coverage area. The BS 26 could then generate and propagate a traffic control rule to the other BSs so as to avoid traffic flooding if the infected MS 60 moves into a service area of another BS.

MS-based traffic control represents one traffic control property and level or granularity. Another application of the traffic control techniques disclosed herein is for protecting against false BSs or malicious BSs. A collaborative approach can be used as shown at 94 to alert other BSs when one BS detects a false BS and to provide advanced protection against false BSs. If the BS 26 is a false BS, then the BS 34 might detect the threat from the false BS 26 at 92 and notify the other BSs by transmitting a traffic control rule to the other BSs at 94. The other BSs can then filter traffic originating from the BS 26 regardless of the intended destination/target of that traffic.

Any of various events may trigger a traffic control rule exchange module 86 to transmit a rule to another traffic control system. New traffic control rules may be transmitted to other traffic control systems as they are established, for example. Traffic control rule transmission may also or instead be scheduled at certain times of day. Some types of traffic control rules, associated with certain types of threat for instance, could be propagated between traffic control systems as they are established, whereas other rule types for less serious threats such as MS-centric spam filtering may be transmitted periodically at certain times of day, for example.

Another possible traffic control rule exchange trigger could be the detection of a new communication device, such as where a new BS is added to a wireless mesh network or a new device joins an ad-hoc network. In general, the traffic control rule exchange module 86 or possibly another module or component of a communication device, may be operative to detect another communication device. Responsive to detection of a new device, the traffic control rule exchange module 86 transmits one or more of its traffic control rules to the new device.

Other triggering events and conditions are also contemplated. Trust relationships and/or white/black lists may be used by a traffic control rule transfer module 86 to decide whether or not a rule transfer is to be made.

Any or all traffic control rules applied at one traffic control system 83 may be transmitted to other traffic control systems. Traffic control rule exchange may be a bulk transfer to transmit all traffic control rules between traffic control systems, or a more selective transfer to transmit only certain traffic control rules. Rules may be selected for transmission by a traffic control rule transfer module 86 based on any of various criteria, such as properties specified in a rule, rule type, etc.

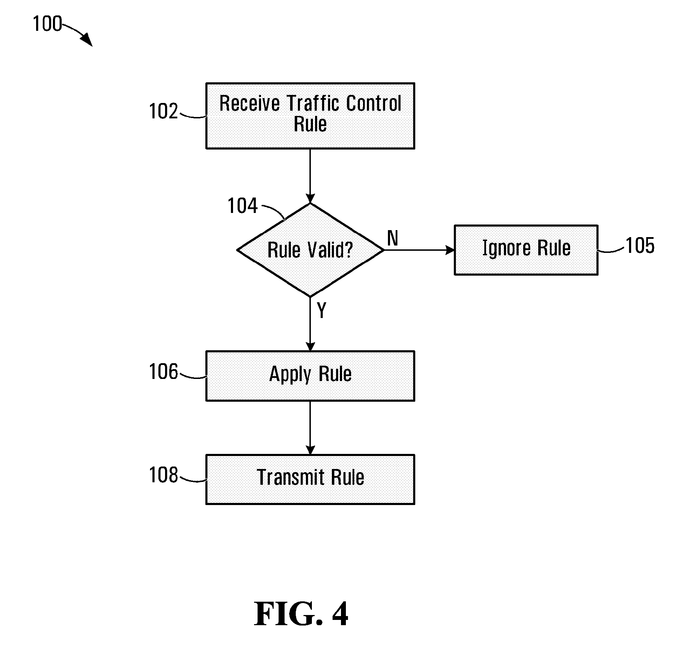

Although described above primarily in the context of a communication device, aspects of the invention may be implemented in other forms. Fig. 4 is a flow diagram of a communication traffic control method.

The method 100 is illustrative of operations which may be performed by a communication traffic control system. At 102, a traffic control rule is received from another traffic control system or a mobile station, for example. A determination is then made at 104 as to whether the received rule is valid. This determination may be made on the basis of a trust relationship or other relationship between a source of the traffic control rule and the traffic control system, white/black lists, an effect of the traffic control rule, etc. In the case of a traffic control rule received from a mobile station by a traffic control system at a base station, the traffic control system might determine whether the base station is the home base station for the mobile station.

A traffic control rule that is determined not to be valid at 104, such as where the rule is received from an untrusted source, is ignored as indicated at 105 and thus is not used in traffic control operations. Additional or different operations may be performed for any invalid rules at 105. For instance, a receiving traffic control system may keep a record of invalid rules and subsequently use that record to identify a malicious base station, and/or provide an indication to the rule source that the received rule has been rejected and will not be applied.

If a received rule is determined to be valid at 104, the rule is applied by the traffic control system at 106, thereby adapting a traffic control operation to the new rule. This may involve adding the rule to a rule database stored in memory for access by a traffic control module, as described above.

A valid rule might also be transmitted to another traffic control system to enable control of traffic transfer at both the traffic control system and the other traffic control system. In some embodiments, the transmit operation at 108, like the operation of applying a received rule at 106, is subject to a decision process. For example, a traffic rule exchange module might determine whether or not a received rule is to be transmitted to other exchange modules based on a flag or other information in a message in which the rule was received. Such a flag might specify whether or not a rule is to be exchanged, and/or an extent to which the rule is to be distributed within a collaborative system. A rule transfer message received from a mobile station might specify that a new traffic control rule is to be propagated by its home base station to only first hop neighbors, along two hops from its home base station, etc., for instance. Rule transmission might also or instead be controlled based on the source of a received rule or other parameters.

Other embodiments of the invention may include fewer, further, or different operations performed in a similar or different order than explicitly shown in Fig. 4. For example, a communication traffic control system might receive, transmit, or both receive and transmit traffic control rules. Although a traffic control system may receive traffic control rules from multiple sources at 102, rules from only certain sources might be transmitted to other traffic control systems at 108. In one embodiment, a traffic control system at a wireless base station receives traffic control rules from other base stations and from its own home mobile stations, but transmits to other base stations only those traffic control rules it receives from its home mobile stations. Further variations, including different possible ways of performing the operations shown in Fig. 4 and/or additional operations which may be performed in some embodiments, may be or become apparent to those skilled in the art. Some of these variations have been described above from a device perspective.

The techniques disclosed herein provide a mechanism whereby wireless base stations collaborate with one another in order to provide traffic control functionality for traffic originating in a wireless communication network. According to one embodiment, each base station may send a list of traffic control rules to the other base stations that form part of a collaborative network, and each base station controls traffic that originates from other base stations or from mobile stations within its wireless coverage area.

Advantages of collaborative and distributed traffic control may include enhanced protection for communication links. The overall strength of protection of a communication link from malicious and non-malicious threats depends upon the strength of protection for the weakest link. Considering that the trend has already begun for wireless mesh networks, especially in the areas of Homeland Security and public services for instance, wireless links represent the weakest link in many communication systems. Traffic control functionality can therefore be particularly important for wireless links.

Instead of placing the entire traffic control processing load on a single firewall as in conventional implementations, collaborative traffic control techniques reduce the load on any one traffic control system by distributing traffic control functionality between multiple traffic control systems.

Also, in a wireless network, current traffic control techniques do not scale well. A new base station can be erected and establish wireless connections with a large number of other base stations and mobile stations, for example, unlike in conventional networks wherein installing new equipment generally involves connecting a cable to a single device or in the worst case a finite number of devices can be connected directly. Although this installation process can be controlled in conventional networks, this is not always the case with wireless networks.

Attacks can be avoided, or the effects of attacks can at least be reduced if collaborative traffic control systems are made aware of certain attacks. The effects of an attack directed at a particular wireless base station in a wireless communication network, for example, can be reduced where the attack is detected by a base station and the detecting base station notifies other base stations in the wireless network that traffic associated with that attack is to be blocked. The attack can thereby be throttled back using a collaborative approach.

Distributed traffic control can also enhance protection for particular communication links. Traffic control systems located at two base stations that communicate with each other through a communication link may exchange traffic control rules so that common rules are applied to control transfer of communication traffic over the link. The amount of traffic on the link can be substantially reduced with both traffic control systems controlling transfer of traffic over the link instead of applying traffic control at only one end of the link. Thus, genuinely useful traffic flows between both the stations.

What has been described is merely illustrative of the application of principles of embodiments of the invention. Other arrangements and methods can be implemented by those skilled in the art without departing from the scope of the present invention.

For example, traffic control functions as disclosed herein do not preclude the implementation of other functions in a communication network, or require that all communication equipment support traffic control functions. A network may include network elements that support collaborative traffic control and network elements that do not.

In addition, although described primarily in the context of methods and systems, other implementations of the invention are also contemplated, as instructions stored on a machine-readable medium for example.

## Claims

1. A communication traffic control apparatus comprising:
a communication traffic control module configured for controlling transfer of communication traffic in accordance with one or more communication traffic control rules; and
a communication traffic control rule exchange module operatively coupled to the communication traffic control module and configured for exchanging a communication traffic control rule with a further communication traffic control rule exchange module of a further communication traffic control apparatus to enable control of communication traffic transfer at both the communication traffic control apparatus and the further communication traffic control apparatus in accordance with the exchanged communication traffic control rule.

2. The apparatus of claim 1, wherein the communication traffic control rule exchange module is configured for exchanging a communication traffic control rule with the further communication traffic control rule exchange module by receiving the communication traffic control rule from the further communication traffic control rule exchange module.

3. The apparatus of claim 2, wherein the communication traffic control rule exchange module is further configured for determining whether the exchanged communication traffic control rule is to be added to the one or more communication traffic control rules.

4. The apparatus of claim 3, wherein the communication traffic control rule exchange module is configured for determining whether the exchanged communication traffic control rule is to be added to the one or more communication traffic control rules based on one or more of: a trust relationship between the communication traffic control apparatus and the further communication traffic control apparatus, an identifier associated with the further communication traffic control apparatus, an effect of the exchanged communication traffic control rule, and an integrity verification.

5. The apparatus of claim 2, wherein the communication traffic control rule exchange module is further configured for transmitting a communication traffic control rule to the further communication traffic control rule exchange module.

6. The apparatus of claim 1, wherein the communication traffic control rule exchange module is configured to exchange a communication traffic control rule with the further communication traffic control rule exchange module by transmitting the communication traffic control rule to the further communication traffic control rule exchange module.

7. The apparatus of any one of claims 1 to 6, wherein each of the one or more communication traffic control rules specifies at least one of: an identifier of a source of communication traffic, a type of communication traffic, and a priority of communication traffic.

8. The apparatus of any one of claims 1 to 7, wherein the communication traffic control rule exchange module is further configured for determining a time characteristic of the exchanged communication traffic control rule, the time characteristic specifying an effective lifetime of the exchanged communication traffic control rule.

9. A communication network element comprising:
the apparatus of any one of claims 1 to 8; and
a transceiver operatively coupled to the communication traffic control module, the transceiver enabling transfer of communication traffic between the communication network element and one or more communication stations,
wherein the communication traffic control module is configured for controlling communication traffic destined for or originating from the one or more communication stations.

10. A communication network comprising:
a plurality of network elements, each network element of at least a subset of the plurality of network elements comprising the apparatus of any one of claims 1 to 8 and a transceiver operatively coupled to the communication traffic control module, the transceiver enabling transfer of communication traffic between the network element and one or more communication stations and between the network element and one or more other network elements.

11. The communication network of claim 10, wherein communication traffic control modules of network elements between which communication traffic is transferred over a communication link are configured for controlling communication traffic to be transferred over the communication link in accordance with one or more common communication traffic control rules.

12. A method comprising:
providing a communication traffic control system for controlling transfer of communication traffic in accordance with one or more communication traffic control rules; and
exchanging a communication traffic control rule between the communication traffic control system and a further communication traffic control system to enable control of communication traffic transfer at both the communication traffic control system and the further communication traffic control system in accordance with the exchanged communication traffic control rule.

13. The method of claim 12, wherein exchanging comprises one or more of:
receiving the communication traffic control rule from the further communication traffic control system; and
transmitting the communication traffic control rule to the further communication traffic control system.

14. The method of claim 13, wherein exchanging comprises receiving the communication traffic control rule from the further communication traffic control system, the method further comprising:
adapting the controlling to control transfer of communication traffic at the communication traffic control system in accordance with the exchanged communication traffic control rule.

15. The method of claim 14, wherein adapting comprises determining whether the controlling is to be adapted, and
wherein the determining is based on one or more of: a trust relationship between the communication traffic control system and the further communication traffic control system, an identifier associated with the further communication traffic control system, an effect of the exchanged communication traffic control rule, and an integrity verification.

16. The method of claim 14, wherein adapting comprises adapting the controlling to control transfer of communication traffic at the communication traffic control system in accordance with the exchanged communication traffic control rule during an effective lifetime of the exchanged communication traffic control rule.

17. The method of claim 13, wherein transmitting comprises determining whether the communication traffic control rule is to be transmitted to the further communication traffic control system, and transmitting the communication traffic control rule to the further traffic control system where it is determined that the communication traffic control rule is to be transmitted to the further communication traffic control system.

18. The method of any one of claims 12 to 17, implemented in a network element of a communication network, the method further comprising:
detecting a new network element in the communication network,
wherein exchanging comprises exchanging a communication traffic control rule between the new network element and the network element.

19. A machine-readable medium storing instructions which when executed perform the method of any one of claims 12 to 18.

20. A distributed communication traffic control system comprising:
a plurality of communication traffic control modules for applying respective sets of one or more communication traffic control rules to control communication traffic transfer; and
means associated with each of the a plurality of communication traffic control modules for propagating communication traffic control rules between communication traffic control modules,
wherein a propagated control rule is applied by multiple communication traffic control modules.

21. A wireless mesh network incorporating the system of claim 20, the wireless mesh network comprising:
a plurality of wireless network elements, each network element comprising a communication traffic control module and associated means for propagating,
the wireless network elements further comprising respective means for detecting addition of a further wireless network element to the wireless mesh network,
wherein the means for propagating, in each of one or more of the wireless network elements, propagates a communication traffic control rule between the one or more of the wireless network elements and the further wireless network element responsive to a detection by the means for detecting.
